# EUROPEAN PATENT APPLICATION

(11) **EP 1 090 949 A1**
(43) Date of publication of application: **11.04.2001**
(21) Application number: 99120171.6
(22) Date of filing: 08.10.1999
(51) Int. Cl.: C08J 9/00

(54) **Foam material comprising linear, isotactic polymers**

(71) Applicant: THE PROCTER & GAMBLE COMPANY, Cincinnati, Ohio 45202 (US)
(72) Inventor: The designation of the inventor has not yet been filed
(74) Representative: Kohol, Sonia

(57) **Abstract**

The present invention relates to foam materials comprising polymeric material wherein the structure of the polymeric material contains elastic amorphous areas of nano-scale-size reinforced with self arranged crystalline domains of nano-crystals.

The polymeric foam material is characterized in that said foam material comprises linear isotactic polymers having a structure of one or several C₂ to C₂₀ olefins, the isotacticity of said polymers, due to a statistic distribution of stereoscopic errors in the polymer chain, being within the range of 25% to 60% of [mmmm] pentad concentration with the proviso that an arbitrary or rather regular sequence of isotactic and atactic blocks is excluded, the polymer having a mean molecular weight Mw within the range of from 100000 to 800000g/mol and a glass temperature T_{g} of between -50 to +30°C.

## Description

### FIELD OF THE INVENTION

The present invention relates to foam materials used for example in insulation, shock absorption, cushioning, packaging, sealing, lubrication, liquid absorption, liquid conducting, filtration of liquid, heat and gas insulation, providing buoyancy, gas absorption packaging and storage. The invention relates to foam materials with open pores as well as to foam materials with closed pores. Specifically, the present invention relates to elastic foam materials.

### BACKGROUND

Foam material and in particular foam materials comprising olefinic polymers are well known in the art and enjoy widespread usage throughout the industry. Typical areas of application of such foam material include hygienic articles and in particular disposable absorbent articles, packaging materials.

Foam materials comprising commonly used polyolefins such as PP, PE, PS, PIB have a number of useful properties. They are bio-compatible and food compatible, chemically stabile, inert, non toxic materials. However, most of them have poor mechanical properties including insufficient strength/tear resistance, insufficient stretchability/elasticity and the like.

Several approaches have been proposed in the prior art to provide elastic properties to such foam materials. The most commonly used approach is based on changing the chemical structure of the polymer by introducing hinged joints/moieties into the main chain of the polymer. These hinges provide more flexibility to the polymeric backbone preventing crystallization of polymer, lowering the glass transition temperature (Tg) and improving the elasticity of the resulting material. Usually, the hinge groups contain heteroatoms providing flexibility such as oxygen, nitrogen or chlorine placed into the main chain or into bulky side groups. Another approach is mastication of the polymer by blending with special plasticizing agents. Both approaches, however, require heteroatoms to be introduced into the molecule or into the bulk of the coating material.

The third approach proposed in the prior art to provide elastic properties to such foam materials, which is more close to the present invention, is to exploit the formation of hetero-phases which reinforce the bulk material by forming a physical net. To do this the block-co-polymerization of two or more different monomers has been used leading to polymeric backbones comprising blocks with different Tg. This results in micro-phase separation in the bulk with formation of reinforcing crystalline domains of one co-polymer linked with each other by flexible chains of the second co-polymer.

In essence, conventional foam materials carry a wide variety of inherent disadvantages including but not being limited to insufficient strength/tear resistance, insufficient stretchability/elasticity, not being bio-compatible, not being food compatible, comprising heteroatoms such as chlorine and hence leading to toxic residues when burnt, and the like.

It is an object of the present invention to provide foam materials which overcome the disadvantages of the prior art foam materials.

It is an further object of the present invention to provide articles which comprise elastic foam materials.

It is an further object of the present invention to provide a method for manufacturing foam material of the present invention.

### SUMMARY OF THE INVENTION

The present invention provides a polymeric foam material. The polymeric foam material is characterized in that said foam material comprises linear isotactic polymers having a structure of one or several C₂ to C₂₀ olefins, the isotacticity of said polymers, due to a statistic distribution of stereoscopic errors in the polymer chain, being within the range of 25% to 60% of [mmmm] pentad concentration with the proviso that an arbitrary or rather regular sequence of isotactic and atactic blocks is excluded, the polymer having a mean molecular weight Mw within the range of from 100000 to 800000 g/mol and a glass temperature T_{g} of between -50 to +30 °C.

The present invention further provides a method for manufacturing the polymeric foam material of the present invention comprising a step of processing the polymeric material, said step of processing selected from the group of inert gas expansion, evaporated solvent expansion, reactive reagent gas expansion, high internal phase emulsion, bead expansion, and combinations thereof.

### DETAILED DESCRIPTION OF THE INVENTION

The present invention provides foam materials comprising linear isotactic polymers having a structure of one or several C₂ to C₂₀ olefins. The isotacticity of the polymers, due to a statistic distribution of stereoscopic errors in the polymer chain, is within the range of from 25% to 60% of [mmmm] pentad concentration with the proviso that an arbitrary or rather regular sequence of isotactic and atactic blocks is excluded. The mean molecular weight M_{w} of the polymer is within the range of from 100000 to 800000 g/mol and the glass temperature T_{g} is between-50 and +30 °C.

These polymers exhibit a semi-crystalline structure. The structure contains elastic amorphous areas of nano-scale-size reinforced with self arranged crystalline domains of nano-crystals. The formation of brittle macro-crystalline material from the polymer is achieved by introducing the defects into the polymeric backbone.

Isolated monomer units with opposite stereo configuration have been used as the defects, i.e. single stereo errors.

The polymers and a process for manufacturing such polymers are described in PCT patent application EP99/02379 incorporated herein by reference. A catalyst combination suitable for the preparation of such polymers is described in PCT patent application EP99/02378 incorporated herein by reference. These polymers differ in their elastic-thermoplastic behavior from the state of the art as represented for example by EP-A- 0 707 016. In particular, the polymers used in manufacturing the foam materials of the present invention have a distinctive rubber-elastic plateau in their tensile-strength curves. The polymers of the present invention are bio-compatible may be burnt without toxic residues since they contain no heteroatoms such as chlorine.

The foam materials of the present invention may have open pores or may have closed pores.

In the prior art, a wide variety of suitable techniques to manufacture foam materials are known including but not being limited to inert gas expansion, evaporated solvent expansion, reactive reagent gas expansion, high internal phase emulsion, bead expansion, and combinations thereof. The aforementioned methods for manufacturing foam materials all have specific advantages which are known to the skilled person. Hence, the skilled person will be able to select a suitable method for manufacturing the foam material of the present invention depending on the specific requirement of the respective application of the foam material.

The foam material according to the present invention may also be used as a construction element in an article. Thereby, the functionalities of the foam material include but is not limited to heat insulation, electric insulation, shock absorption, cushioning, acoustic wave damping, protecting other elements of the article, sealing, packaging, storing, providing buoyancy, and the like. Such articles include but are not limited to toys, furniture, mattresses, carpets, clothing, shoes, sport equipment, complex constructions such as buildings (floor coverings, house wraps, and the like), cars, household appliances, and the like. Having regard to the specific advantages of the polymers used for the articles of the present invention, it will be readily apparent to the skilled practitioner to apply and to optionally modify the foam materials according to the present invention as construction elements in the above and similar articles.

The foam material of the present invention may be oil absorbent and may be rendered water absorbent by suitable surface energy modifiers. Suitable surface energy modifiers are well known in the art. In case the foam material of the present invention is absorbent, the foam material may used in instances including but not being limited to oil absorption, solvent absorption, spill absorption, liquid distribution, liquid transportation, and the like. The foam material of the present invention may further be used to deliver absorbed liquids such as for example adhesive, shoe polish, ink, lubricants and the like upon compression of the foam material.

## Claims

1. A polymeric foam material
characterized in that
said foam material comprises linear isotactic polymers having a structure of one or several C₂ to C₂₀ olefins, the isotacticity of said polymers, due to a statistic distribution of stereoscopic errors in the polymer chain, being within the range of 25% to 60% of [mmmm] pentad concentration with the proviso that an arbitrary or rather regular sequence of isotactic and atactic blocks is excluded, the polymer having a mean molecular weight Mw within the range of from 100000 to 800000 g/mol and a glass temperature T_{g} of between -50 to +30 °C.

2. A polymeric foam material according to Claim 1 wherein said polymeric foam material is stretchable.

3. A polymeric foam material according to Claim 2 wherein said foam material is elastically expandable.

4. An foam material of the present invention according to any of Claims 1 through Claim 3 wherein said foam material is oil absorbent.

5. A foam material of the present invention according to any of Claims 1 through Claim 3 wherein said foam material is water absorbent.

6. A polymeric foam material according to any of the preceding claims wherein said linear, isotactic polymer is polypropylene.

7. An article comprising the foam material according to any of the preceding claims wherein said article comprises said foam material as a construction element.

8. A method for manufacturing a polymeric foam material comprising a step of processing a polymeric material, said step of processing selected from the group of inert gas expansion, evaporated solvent expansion, reactive reagent gas expansion, high internal phase emulsion, bead expansion, and combinations thereof
characterized in that
said polymeric material comprises a linear isotactic polymers having a structure of one or several C₂ to C₂₀ olefins, the isotacticity of said polymers, due to a statistic distribution of stereoscopic errors in the polymer chain, being within the range of 25% to 60% of [mmmm] pentad concentration with the proviso that an arbitrary or rather regular sequence of isotactic and atactic blocks is excluded, the polymer having a mean molecular weight Mw within the range of from 100000 to 800000 g/mol and a glass temperature T_{g} of between -50 to +30 °C.
